# EUROPÄISCHE PATENTSCHRIFT

(11) **EP 4 434 768 B1**
(45) Veröffentlichungstag und Bekanntmachung des Hinweises auf die Patenterteilung: **17.12.2025**
(21) Anmeldenummer: 24158814.4
(22) Anmeldetag: 21.02.2024
(51) Int. Cl.: B60C 11/03, B60C 11/12

(54) **FAHRZEUGLUFTREIFEN**
PNEUMATIC TYRE FOR VEHICLES
BANDAGE PNEUMATIQUE POUR VÉHICULE

(30) Priorität: 21.03.2023 DE 102023202472
(43) Veröffentlichungstag der Anmeldung: 25.09.2024
(73) Patentinhaber: Continental Reifen Deutschland GmbH, 30175 Hannover (DE)
(72) Erfinder: Faturikova, Dagmar, 020 01 Púchov (SK); Korbas, Mario, 020 01 Púchov (SK); Valek, Branislav, 020 01 Púchov (SK); Pikna, Michal, 020 01 Púchov (SK); von Zobeltitz, Carsten, 30175 Hannover (DE); Pickel, David, Fort Mill, SC 29707 (US); Lekova, Dobromira, 30175 Hannover (DE)
(74) Vertreter: Continental Corporation

(56) Entgegenhaltungen:
- CN-U- 214 874 036
- JP-A- 2005 126 055
- US-A1- 2013 133 799
- US-A1- 2014 299 245
- US-A1- 2015 053 320
- US-A1- 2017 182 851

## Beschreibung

Die Erfindung betrifft einen Fahrzeugluftreifen, insbesondere Nutzfahrzeugreifen, mit einem Laufstreifen mit schulterseitigen Profilrippen und einem von diesen durch Rillen getrennten zentralen Laufstreifenbereich mit blockartigen Profilstrukturen und/oder Profilblöcken, welche mit zur axialen Richtung unter einem Winkel von 0° bis 70° verlaufenden Einschnitten mit einer Breite von 0,4 mm bis 1,6 mm, einer maximalen Tiefe von 70% bis 100% der Profiltiefe und einer an der Laufstreifenperipherie ermittelten Erstreckungslänge versehen sind, wobei die Einschnitte, in Draufsicht betrachtet, jeweils einen ersten Einschnittabschnitt, welcher, im Querschnitt betrachtet, gerade sowie in radialer Richtung oder zu dieser unter einem Winkel von bis zu 2° verläuft, und einen zweiten Einschnittabschnitt mit einer Erstreckungslänge von 55% bis 90% der Erstreckungslänge des Einschnitts aufweisen, wobei der zweite Einschnittabschnitt über seine komplette Erstreckungslänge eine Einschnittzone aufweist, welche in radialer Richtung gewellt mit zumindest 1,5 Wellenlängen verläuft und eine in radialer Richtung ermittelte maximale Höhe von 50% bis 100% der maximalen Tiefe des Einschnitts aufweist, wobei blockartige Profilstrukturen und/oder Profilblöcke mit jeweils zumindest zwei Einschnitten vorgesehen sind, wobei die zwei Einschnitte, in Draufsicht betrachtet,
- in axialer Richtung verlaufen,
- zur axialen Richtung gleichsinnig geneigt verlaufen oder
- von welchen einer in axialer Richtung und der andere zur axialen Richtung geneigt verläuft.

Ein derartige Fahrzeugluftreifen ist beispielsweise aus der US 2013/0133799 A1 bekannt. Dieser Fahrzeugluftreifen weist einen Laufstreifen mit blockartig strukturierten schulterseitigen Profilrippen und einem zentralen Laufstreifenbereich mit Profilblöcken auf, welche mit zur axialen Richtung verlaufenden Einschnitten mit einer Breite von kleiner 1,0 mm und einer maximalen Tiefe von beispielsweise 7,0 mm versehen sind. Die Einschnitte setzen sich, in Draufsicht betrachtet, aus einem gerade verlaufenden, randseitigen, ersten Einschnittabschnitt, einem zickzack-förmig verlaufenden, zentralen, zweiten Einschnittabschnitt und einem gerade verlaufenden, randseitigen, dritten Einschnittabschnitt zusammen. Der randseitige, erste Einschnittabschnitt verläuft, im Querschnitt betrachtet, gerade sowie in radialer Richtung, sodass die Einschnittwände in diesem Einschnittabschnitt unstrukturiert sind, wobei der erste Einschnittabschnitt in radialer Richtung eine Tiefe von höchstens 50% der maximalen Tiefe aufweist. Der zentrale, zweite Einschnittabschnitt verläuft in Draufsicht über mehr als 55% der Erstreckungslänge des Einschnitts, ist ebenfalls auf die maximale Tiefe ausgeführt und ist ferner über seine komplette Erstreckungslänge mit einer lokalen Einschnittzone versehen, welche in radialer Richtung über genau 1,5 Wellenlängen gewellt verläuft, bis zum Einschnittgrund reicht und in radialer Richtung eine Höhe von deutlich mehr 50% der maximalen Tiefe des Einschnitts aufweist. Der randseitige, dritte Einschnittabschnitt ist auf die maximale Tiefe ausgeführt, wobei die Einschnittwände in diesem Einschnittabschnitt mit lokalen, kuppelförmigen Erhebungen und diesen gegenüberliegenden, korrespondierenden Vertiefungen versehen sind. Innerhalb eines Profilblocks sind die Einschnitte derart angeordnet, dass der randseitige, erste Einschnittabschnitt und der randseitige, dritte Einschnittabschnitt in aufeinanderfolgenden Einschnitten - bezüglich ihrer Lage im Einschnitt - abwechselnd verlaufen. Der Fahrzeugluftreifen soll eine gute Performance auf Eis und Schnee aufweisen.

Aus der US 2015/0053320 A1 ist ferner ein Fahrzeugluftreifen mit einem Laufstreifen mit mittleren Profilblöcken bekannt, welche jeweils von zumindest einem Einschnitt durchquert sind. Der Einschnitt weist, in Draufsicht betrachtet, zwei randseitige Einschnittabschnitte, welche, im Querschnitt betrachtet, gerade sowie in radialer Richtung verlaufen, und einen mittleren Einschnittabschnitt mit einer Erstreckungslänge von zirka 55% der Erstreckungslänge des Einschnitts auf. Der mittlere Einschnittabschnitt weist über seine Erstreckungslänge eine Einschnittzone auf, welche in radialer Richtung gewellt sowie über 3,0 Wellenlängen verläuft und eine in radialer Richtung ermittelte maximale Höhe von zirka 70% der maximalen Tiefe des Einschnitts aufweist. Ferner weist der Einschnitt einen kanalförmigen Einschnittgrund auf, welcher an den in Draufsicht vorliegenden Längsenden des Einschnitts in eine an der jeweiligen Rille liegende, über die radiale Erstreckung des Einschnitts verlaufende kanalförmige Vertiefung übergeht. In Bereich des an die Einschnitte angrenzenden Gummimaterials soll die Gefahr des Auftretens von Rissen gering sein.

Es ist bekannt, dass in blockartigen Profilstrukturen und/oder Profilblöcken ausgebildete Einschnitte zu guten Griffeigenschaften beitragen. Durch die Einschnitte weisen die blockartigen Profilstrukturen und/oder Profilblöcke eine verminderte Steifigkeit auf, was beispielsweise zu Nachteilen bei den Handlingeigenschaften, insbesondere der Kraftübertragung zum Untergrund, führen kann. Bei Fahrzeugluftreifen der eingangs genannten Art, bei welchen in den blockartigen Profilstrukturen und/oder den Profilblöcken Einschnitte mit in radialer Richtung gewellt verlaufenden Einschnittzonen vorgesehen sind, stützen sich die durch die Einschnitte gebildeten Profilsegmente über die gewellten Einschnittwandabschnitte unter Belastung auf eine die Beweglichkeit der Profilsegmente begrenzende Weise gegeneinander ab, wodurch die erwähnte, mit den Einschnitten einhergehende, verminderte Steifigkeit der blockartigen Profilstrukturen und/oder Profilblöcke zumindest teilweise ausgeglichen wird.

Die in Formsegmenten von Vulkanisationsformen verankerten Lamellen, welche Einschnitte mit gewellten Einschnittzonen ausbilden, lassen sich nach der Vulkanisation des Reifens - gegenüber Lamellen, welche Einschnitte ohne derartige Einschnittzonen ausformen - schwieriger aus dem Laufstreifen entformen, sodass die Gefahr des Auftretens von Schäden am Gummimaterial des Laufstreifens, insbesondere von Rissen, erhöht ist. Insbesondere bei Laufstreifen mit einer hohen Anzahl von Einschnitten ist die Gefahr besonders hoch.

Der Erfindung liegt daher die Aufgabe zugrunde, bei einem Fahrzeugluftreifen der eingangs genannten Art unter Aufrechterhaltung der erwähnten vorteilhaften Effekte der Einschnitte, die Gefahr, dass beim Entformen des Reifens aus der Vulkanisationsform Einrisse im Bereich des an die Einschnitte angrenzenden Gummimaterials entstehen, deutlich zu reduzieren.

Gelöst wird die gestellte Aufgabe erfindungsgemäß dadurch,
dass sich die zumindest zwei Einschnitte jeweils aus dem ersten und dem zweiten Einschnittabschnitt zusammensetzen, wobei innerhalb einer blockartigen Profilstruktur bzw. eines Profilblocks der erste und der zweite Einschnittabschnitt in aufeinanderfolgenden Einschnitten - bezüglich ihrer Lage im Einschnitt - abwechselnd verlaufen und wobei sich der zweite Einschnittabschnitt, in der in Draufsicht vorliegenden Erstreckungsrichtung des Einschnitts betrachtet, aus einem an den ersten Einschnittabschnitt anschließenden, in radialer Richtung auf die maximale Tiefe des Einschnitts reichenden Bereich und einem randseitigen Bereich mit einer in radialer Richtung ermittelten konstanten Tiefe von 70% bis 90% der maximalen Tiefe des Einschnitts zusammensetzt.

Durch die abwechselnde Lage der ersten und zweiten Einschnittabschnitte sind in der Folge auch die in radialer Richtung gewellt ausgeführten Einschnittzonen entsprechend abwechselnd innerhalb der blockartigen Profilstruktur bzw. des Profilblocks angeordnet. Die bei der Entformung des vulkanisierten Reifens aus der Vulkanisationsform auftretenden Kräfte im Bereich der die Einschnitte ausformenden Lamellen sind dadurch deutlich reduziert, sodass in dem an die Einschnitte angrenzenden Gummimaterial keine Risse mehr auftreten bzw. diese Rissgefahr signifikant reduziert ist.

Der auf die maximale Tiefe des Einschnitts reichenden Bereich und der randseitige Bereich mit einer konstanten Tiefe von 70% bis 90% der maximalen Tiefe sorgen für eine zusätzliche Stabilisierung des Gummimateriales im an die Einschnitte angrenzenden Bereich.

Gemäß einer bevorzugten Ausführung beträgt die Erstreckungslänge des zweiten Einschnittabschnitts 60% bis 80% der Erstreckungslänge des Einschnitts. Diese Ausgestaltung ist für den Entformungsvorgang von zusätzlichem Vorteil.

Bei der zuletzt genannten Ausführung ist gemäß einer vorteilhaften Weiterbildung vorgesehen, dass der Bereich, welcher in radialer Richtung auf die maximale Tiefe des Einschnitts reicht, eine Erstreckungslänge von 45% bis 90%, insbesondere von bis zu 75%, der Erstreckungslänge des zweiten Einschnittabschnitts aufweist.

Eine weitere bevorzugte Ausführungsform ist dadurch gekennzeichnet, dass der erste Einschnittabschnitt in radialer Richtung eine konstante Tiefe von 10% bis 20% der maximalen Tiefe des Einschnitts aufweist. Ein derart seichter Einschnittabschnitt ist für den Entformungsvorgang von weiterem Vorteil.

Bevorzugter Weise verlaufen die Einschnitte, in Draufsicht betrachtet, zumindest über den Großteil ihrer Erstreckungslänge in Form einer harmonischen Welle. Dies ist für die gegenseitige Stabilisierung der jeweiligen Profilsegmente vorteilhaft.

Bevorzugt ist es ferner, wenn die Einschnittzone bezogen auf ihren äußeren Umfang rechteckförmig ausgebildet ist.

Eine weitere bevorzugte Ausführung sieht vor, dass die maximale Höhe der Einschnittzone bis zu 95%, insbesondere 60% bis 90%, bevorzugt bis zu 75%, der maximalen Tiefe des Einschnitts beträgt. Dies sorgt für eine wirkungsvolle gegenseitige Abstützung der durch die Einschnittzone der Einschnitte gebildeten Blocksegmente, wobei weiterhin die Gefahr, dass bei der Entformung des Reifens im an die Einschnitte angrenzenden Gummimaterial Risse auftreten signifikant reduziert ist.

Bevorzugt weist die Einschnittzone zur Laufstreifenperipherie in radialer Richtung einen konstanten Abstand von 0,5 mm bis 1,5 mm auf. Diese Maßnahme reduziert die Rissanfälligkeit im Bereich der Laufstreifenperipherie.

Gemäß einer weiteren bevorzugten Ausführung, verläuft die Einschnittzone in radialer Richtung über 2,0 bis 5,0 Wellenlängen.

Ferner ist es bevorzugt, wenn die Einschnitte die blockartigen Profilstrukturen bzw. die Profilblöcke durchqueren. Auch diese Maßnahme trägt zu einer geringen Rissanfälligkeit im an die Einschnitte angrenzen Gummimaterial bei der Entformung bei.

Es ist darüber hinaus günstig, wenn die Einschnitte jeweils einen Einschnittgrund aufweisen, welcher sich aus einem im auf die maximale Tiefe des Einschnitts reichenden Bereich befindlichen, auf der maximalen Tiefe verlaufenden ersten Abschnitt, einen über den randseitigen Bereich verlaufenden zweiten Abschnitt, einen im ersten Einschnittabschnitt verlaufenden dritten Abschnitt und zwischen den Abschnitten verlaufenden Übergangsabschnitten zusammensetzt, wobei der Übergangsabschnitt zwischen dem ersten und dem dritten Abschnitt zur radialen Richtung unter einem Winkel von 3° bis 20°, insbesondere von 5° bis 10°, verläuft und wobei der Übergangsabschnitt zwischen dem ersten und dem zweiten Abschnitt zur radialen Richtung unter einem Winkel von 25° bis 45°, insbesondere von 30° bis 40°, verläuft. Derart gewinkelte Übergangsabschnitte des Einschnittgrunds tragen dazu bei, dass die bei der Entformung des Reifens im an die Einschnitte angrenzenden Gummimateriales auftretenden Kräfte gering sind.

Weitere Merkmale, Vorteile und Einzelheiten der Erfindung werden nun anhand der Zeichnung, die schematisch ein Ausführungsbeispiel der Erfindung darstellt, näher beschrieben. Dabei zeigen
Fig. 1 eine Draufsicht einen Umfangsabschnitt eines Laufstreifens eines Nutzfahrzeugreifens mit einer Ausführungsvariante der Erfindung,
Fig. 2 eine vergrößerte Draufsicht auf einen Ausschnitt des Laufstreifens,
Fig. 3 eine Schrägansicht einer Visualisierung eines Einschnitts (Abzugskörper des Einschnitts),
Fig. 4 eine Frontansicht des Einschnitts aus Fig. 3 und
Fig. 5 einen Schnitt entlang der Linie V-V der Fig. 4, wobei zusätzlich den Einschnitt umgebendes Gummimaterial angedeutet ist.

Gemäß der Erfindung ausgeführte Fahrzeugluftreifen sind Reifen für mehrspurige Kraftfahrzeuge, insbesondere Nutzfahrzeugreifen, bevorzugt für Busse oder Lastkraftwagen (LKW), sowie vorzugsweise Reifen in Radialbauart.

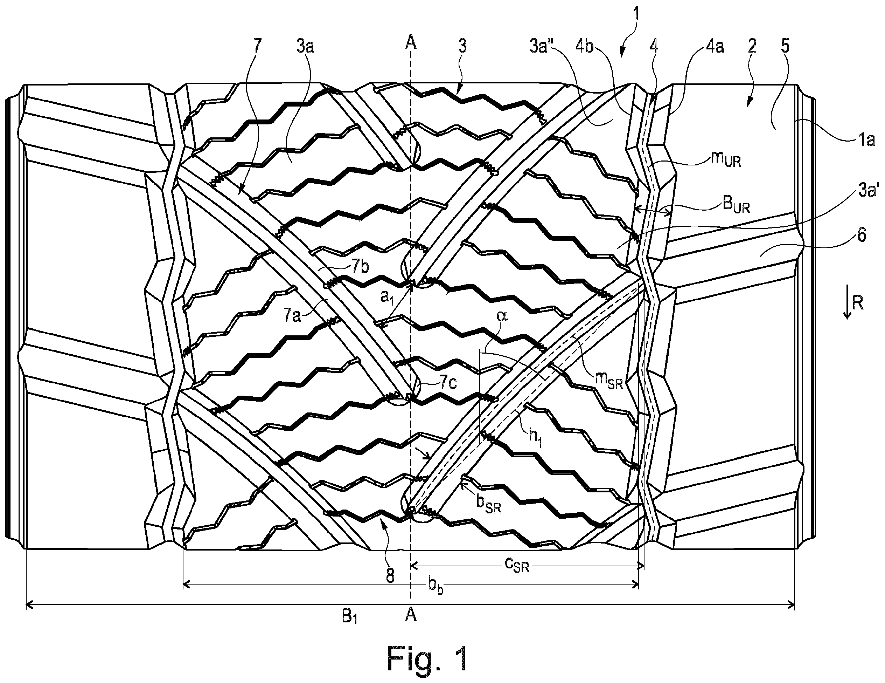

Fig. 1 zeigt eine Draufsicht auf einen Umfangsabschnitt eines Laufstreifens 1 eines Nutzfahrzeugreifens. Die Reifenäquatorialebene ist durch eine Linie A-A gekennzeichnet. Der Laufstreifen 1 weist eine laufrichtungsgebundene Profilierung auf, wobei der Nutzfahrzeugreifen derart an einem Fahrzeug zu montieren ist, dass er die durch den Pfeil R angedeutete Abrollrichtung bei Vorwärtsfahrt aufweist.

Der Laufstreifen 1 ist laufstreifenaußenseitig durch an der Laufstreifenperipherie liegende, in Umfangsrichtung verlaufende Randkanten 1a begrenzt, weist eine in axialer Richtung ermittelte, auf die Randkanten 1a bezogene Breite B₁, zwei schulterseitige Profilrippen 2 und einen von der Reifenäquatorialebene (Linie A-A) halbierten, zentralen Laufstreifenbereich 3 auf. Der zentrale Laufstreifenbereich 3 ist von den schulterseitigen Profilrippen 2 jeweils durch eine Umfangsrille 4 getrennt.

Die Umfangsrillen 4 verlaufen, in Draufsicht betrachtet, in einer regelmäßigen Zickzack-Form, weisen jeweils eine dem Rillenverlauf folgende Rillenmittellinie m_{UR} sowie eine an der angrenzenden, schulterseitigen Profilrippe 2 ausgebildete, laufstreifenaußenseitige Rillenkante 4a und eine am zentralen Laufstreifenbereich 3 ausgebildete, laufstreifeninnenseitige Rillenkante 4b auf. Jede Umfangsrille 4 ist in radialer Richtung auf die jeweils vorgesehene Profiltiefe von 10,0 mm bis 26,0 mm ausgeführt und weist eine in Draufsicht senkrecht zur Rillenmittellinie m_{UR} sowie zwischen den Rillenkanten 4a, 4b ermittelte Breite B_{UR} von 10,0 mm bis 30,0 mm auf.

Die schulterseitigen Profilrippen 2 sind lediglich schematisch dargestellt, setzen sich aus in Umfangsrichtung aufeinanderfolgenden, schulterseitigen Profilblöcken 5 zusammen, welche durch in die jeweilige Umfangsrille 4 einmündende schulterseitige Querrillen 6 voneinander getrennt sind.

Der zentrale Laufstreifenbereich 3 weist eine auf die laufstreifeninnenseitigen Rillenkanten 4b bezogene, in axialer Richtung ermittelte maximale Breite b_{b} von 45% bis 80% der Breite B₁ des Laufstreifens 1 auf. Die maximale Breite b_{b} bezieht sich auf zwei in Umfangsrichtung ausgerichtete Linien, welche durch die am weitesten laufstreifenaußenseitig liegenden Stellen der laufstreifeninnenseitigen Rillenkanten 4b verlaufen.

Der zentrale Laufstreifenbereich 3 ist mit in Draufsicht über die maximale Breite b_{b} V-förmig zueinander verlaufenden, innerhalb des zentralen Laufstreifenbereichs 3 sacknutartig endenden, jeweils in eine der Umfangsrillen 4 einmündenden Schrägrillen 7 versehen. Die Abrollrichtung des Reifens bei Vorwärtsfahrt (Pfeil R) ist derart, dass die Schrägrillen 7 zuerst mit ihren laufstreifeninnenseitigen Enden in die Bodenaufstandsfläche eintreten. Die Schrägrillen 7 bilden eine Abfolge von in die eine Umfangsrille 4 einmündenden Schrägrillen 7 und eine Abfolge von in die andere Umfangsrille 4 einmündenden Schrägrillen 7, wobei die Schrägrillen 7 der einen Abfolge zu den Schrägrillen 7 der anderen Abfolge in Umfangsrichtung versetzt sind. Die Schrägrillen 7 weisen jeweils eine in Draufsicht dem Rillenverlauf folgende Rillenmittellinie m_{SR} auf, verlaufen, in Draufsicht betrachtet, jeweils bogenförmig (durchgehend gebogen), wobei die Schrägrillen 7 jeder Abfolge - bezogen auf ihre Rillenmittellinien m_{SR} - parallel zueinander sowie - bezogen auf eine die Enden der jeweiligen Rillenmittellinie m_{SR} verbindende, gerade verlaufende Hilfslinie h₁ - zur Umfangsrichtung unter einem Winkel α von 30° bis 70° verlaufen. Die Schrägrillen 7 weisen in radialer Richtung eine maximale Tiefe (Tiefe an der tiefsten Stelle) von 60% bis 100%, insbesondere von 75% bis 95%, der Profiltiefe, eine in Draufsicht senkrecht zur Rillenmittellinie m_{SR} an der Laufstreifenperipherie gemessene Breite b_{SR} von 5,0 mm bis 35,0 mm, insbesondere von 10,0 mm bis 25,0 mm, sowie eine auf die Rillenmittellinie m_{SR} bezogene, in die axiale Richtung projizierte Erstreckungslänge c_{SR} von 40% bis 60% der Breite b_{b} des zentralen Laufstreifenbereichs 3 auf. Die Schrägrillen 7 enden laufstreifeninnenseitig in einem an der Laufstreifenperipherie in tangentialer Verlängerung ihrer Rillenmittellinie m_{SR} ermittelten Abstand a₁ von 10,0 mm bis 25,0 mm vor der jeweiligen Schrägrille 7 der anderen Abfolge. "Senkrecht zur Rillenmittellinie m_{SR}" bedeutet, dass die Messung der Breite b_{SR} senkrecht zu einer an die Rillenmittellinie m_{SR} angelegten Tangente erfolgt. "In tangentialer Verlängerung" bedeutet, dass die Messung des Abstands a₁ entlang einer an die Rillenmittellinie m_{SR} angelegten, durch das laufstreifeninnenseitige Ende der Rillenmittelinie m_{SR} verlaufenden Tangente erfolgt. Jede Schrägrille 7 ist durch einen Rillengrund 7a, zwei Rillenflanke 7b und eine zwischen den beiden Rillenflanken 7b sowie zum Rillengrund 7a verlaufende, in Draufsicht insbesondere bogenförmig ausgeführte Endflanke 7c begrenzt.

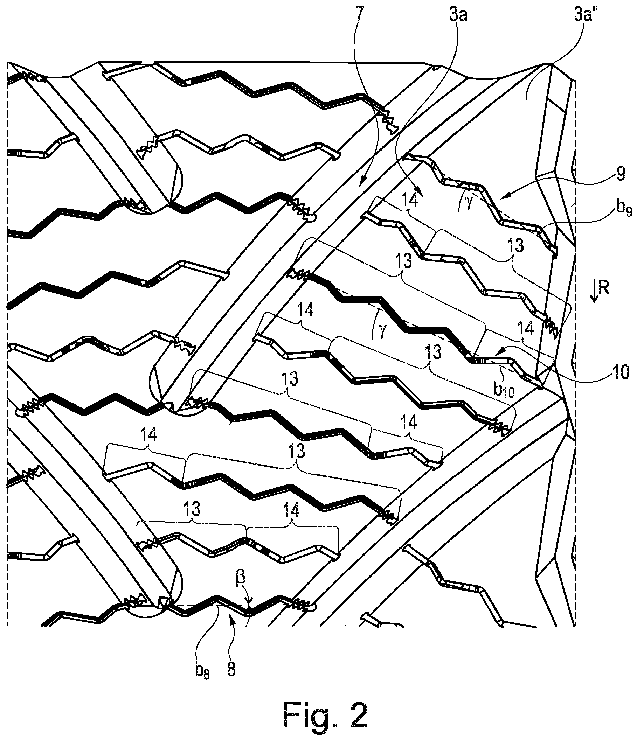

Der zentrale Laufstreifenbereich 3 ist mit Teilungseinschnitten 8 versehen, wobei pro Schrägrille 7 ein über die Endflanke 7c dieser Schrägrille 7 einmündender Teilungseinschnitt 8 vorgesehen ist, welcher in die in Verlängerung dieser Schrägrille 7 liegende Schrägrille 7 der jeweils anderen Abfolge einmündet. Die Teilungseinschnitte 8 weisen eine konstante Breite von 0,4 mm bis 1,6 mm, insbesondere von 0,6 mm bis 1,2 mm, und in radialer Richtung eine vorzugsweise über ihre gesamte Erstreckung vorliegende, maximale Tiefe von 60% bis 100%, insbesondere von 85% bis 95%, der Profiltiefe auf. Die Teilungseinschnitte 8 verlaufen, in Draufsicht betrachtet, über den Großteil ihrer Erstreckung jeweils in Form einer harmonischen Zickzack-Welle sowie - bezogen auf ihre in Erstreckungsrichtung ausgerichteten Einschnittbasislinien b₈ (Fig. 2) - zur axialen Richtung jeweils unter einem Winkel β (Fig. 2) von 0°.

Die Teilungseinschnitte 8 und die Schrägrillen 7 verleihen dem zentralen Laufstreifenbereich 3 blockartige Profilstrukturen 3a, welche in Draufsicht entlang von zwei in Umfangsrichtung aufeinanderfolgenden, zur selben Abfolge gehörenden Schrägrillen 7 langgestreckt parallelogrammförmig sind. Jede blockartige Profilstruktur 3a weist an der jeweiligen Umfangsrille 4 daher einen stumpfwinkeligen Eckbereich 3a' und einen spitzwinkligen Eckbereich 3a" auf.

Gemäß Fig. 2 ist jede blockartige Profilstruktur 3a mit einem zum spitzwinkeligen Eckbereich 3a" nächstliegenden, randseitigen Einschnitt 9 und im Bereich zwischen dem randseitigen Einschnitt 9 und jenem Teilungseinschnitt 8, welcher die jeweilige blockartige Profilstruktur 3a am beim Abrollen des Reifens bei Vorwärtsfahrt (Pfeil R) zuerst in den Untergrund eintretenden Randbereich begrenzt, mit einer Gruppe aus sechs, in Umfangsrichtung aufeinanderfolgenden Einschnitten 10 versehen.

Die Einschnitte 9, 10 durchqueren die jeweilige blockartige Profilstruktur 3a und sind, in Draufsicht betrachtet, zu den an die zugehörige blockartige Profilstruktur 3a in Umfangsrichtung angrenzenden Schrägrillen 7 bezüglich der Umfangsrichtung gegensinnig geneigt. Der randseitige Einschnitt 9 und jeder Einschnitt 10 weist an der Laufstreifenperipherie jeweils eine in Draufsicht in seiner Erstreckungsrichtung ausgerichtete, gerade verlaufende Einschnittbasislinie b₉ (Einschnitt 9), b₁₀ (Einschnitt 10) auf und verläuft - bezogen auf die Einschnittbasislinie b₉, b₁₀ - zur axialen Richtung unter einem Winkel γ von 2° bis 70°, insbesondere von bis zu 60°, wobei der Winkel γ innerhalb jeder Profilstruktur 3a ausgehend von jenem Einschnitt 10, welcher gegen die Abrollrichtung (Pfeil R) auf den entsprechenden Teileinschnitt 8 folgt, von Einschnitt 10 zu Einschnitt 10 sowie vom Einschnitt 10, welcher dem randseitigen Einschnitt 9 benachbart ist, zum Einschnitt 9 um 2° bis 10°, insbesondere um 3° bis 7°, stufenweise zunimmt.

Der Einschnitt 9 verläuft, in Draufsicht betrachtet, in Form einer harmonischen Zickzack-Welle, ist durch zwei Einschnittwände (nicht bezeichnet) und einen Einschnittgrund begrenzt, weist eine zwischen sowie senkrecht zu den Einschnittwänden ermittelte konstante Breite von 0,4 mm bis 1,6 mm, insbesondere von 0,8 mm bis 1,2 mm, und in radialer Richtung eine maximale Tiefe (Tiefe an der tiefsten Stelle) von 70% bis 100% der Profiltiefe auf.

Nachfolgend wird die grundsätzliche, weitere Ausgestaltung der Einschnitte 10 anhand eines einzelnen Einschnitts 10 weiter erläutert. Die innerhalb einer blockartigen Profilstruktur 3 befindlichen Einschnitte 10 unterscheiden sich jedoch geringfügig voneinander, wie noch genauer erläutert wird.

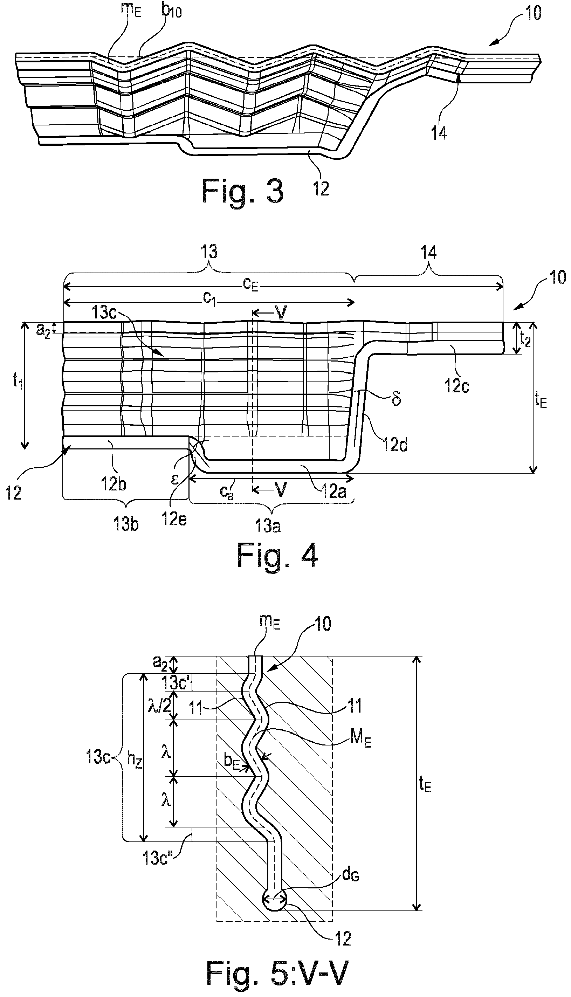

Fig. 3 und Fig. 4 zeigen vereinfachte Darstellungen des in Fig. 1 bezeichneten Einschnitts 10. Der Einschnitt 10 ist durch zwei Einschnittwände 11 (Fig. 5) und einen über den kompletten Einschnitt 10 verlaufenden, kanalförmigen Einschnittgrund 12 (Fig. 3 bis Fig. 5) begrenzt. Der Einschnitt 10 weist eine in Draufsicht dem Einschnittverlauf folgende Einschnittmittellinie m_{E} (Fig. 3), eine von dieser ausgehende, zu den Einschnittwänden 11 übereinstimmend beabstandete Einschnittmittelfläche M_{E} (Fig. 5), in radialer Richtung eine maximale Tiefe t_{E} (Fig. 4, Tiefe an der tiefsten Stelle) von 70% bis 100% der Profiltiefe, eine zwischen den Einschnittwänden 11 sowie senkrecht zur Einschnittmittelfläche M_{E} ermittelte, konstante oder um bis zu 0,1 mm schwankende Breite b_{E} (Fig. 5) von 0,4 mm bis 1,6 mm, insbesondere von 0,8 mm bis 1,2 mm, und eine entlang der Einschnittbasislinie b₁₀ (Fig. 3) ermittelte Erstreckungslänge c_{E} (Fig. 4) auf. Der Einschnitt 10 verläuft, in Draufsicht betrachtet, zumindest über den Großteil seiner Erstreckungslänge c_{E} in Form einer harmonischen Welle.

Gemäß Fig. 4 setzt sich der Einschnitt 10, in seiner in Draufsicht (vergl. Fig. 3) vorliegenden Erstreckungsrichtung und daher entlang der Einschnittbasislinie b₁₀ (Fig. 3) betrachtet, aus einem abschnittsweise auf die maximale Tiefe t_{E} reichenden, im in Draufsicht senkrecht zur Einschnittmittellinie m_{E} (Fig. 3) verlaufenden Querschnitt betrachtet, in radialer Richtung gewellt verlaufenden Einschnittabschnitt 13 und einem, im erwähnten Querschnitt betrachtet, gerade verlaufenden Einschnittabschnitt 14 zusammen.

Der Einschnittabschnitt 13 weist eine entlang der Einschnittbasislinie b₁₀ (Fig. 3) ermittelte Erstreckungslänge c₁ von 55% bis 90%, insbesondere von 60% bis 80%, der Erstreckungslänge c_{E} des Einschnitts 10 auf und setzt sich, in seiner in Draufsicht vorliegenden Erstreckungsrichtung betrachtet, aus einem an den Einschnittabschnitt 14 anschließenden Bereich 13a und einem randseitigen Bereich 13b zusammen. Der Bereich 13a reicht in radialer Richtung auf die maximale Tiefe t_{E} und weist eine parallel zur Einschnittbasislinie b₁₀ (Fig. 3) ermittelte Erstreckungslänge cₐ von 45% bis 90%, insbesondere von bis zu 75%, der Erstreckungslänge c₁ des Einschnittabschnitts 13 auf. Der randseitige Bereich 13b weist in radialer Richtung eine auf das radial innere Ende des Einschnittgrunds 12 bezogene konstante Tiefe t₁ von 70% bis 90% der maximalen Tiefe t_{E} auf.

Der Einschnittabschnitt 13 weist eine über seine Erstreckungslänge c₁ reichende, daher über die Bereiche 13a, 13b reichende, in radialer Richtung gewellt verlaufende Einschnittzone 13c auf, welche in senkrecht zur Einschnittmittellinie m_{E} ausgerichteter Sicht auf die Einschnittwände 11 (Fig. 5) betrachtet, bezogen auf ihren äußeren Umfang rechteckförmig ausgebildet ist. Gemäß Fig. 5 weist die Einschnittzone 13c eine auf die Einschnittmittelfläche M_{E} bezogene, in radialer Richtung ermittelte konstante Höhe hz von 50% bis 95%, insbesondere von 60% bis 90%, bevorzugt von bis zu 75%, der maximalen Tiefe t_{E} des Einschnitts 10 sowie zur Laufstreifenperipherie einen in radialer Richtung ermittelten konstanten Abstand a₂ von 0,5 mm bis 1,5 mm auf. Die Einschnittzone 13c verläuft, im in Draufsicht senkrecht zur Einschnittmittellinie m_{E} verlaufenden Querschnitt betrachtet, in radialer Richtung in Form einer harmonischen, geschwungenen Welle, welche - wie Fig. 3 und Fig. 4 zeigen - die bereits erwähnte, in Draufsicht vorliegende Wellenform des Einschnitts 10 überlagert. "Harmonisch" bedeutet, dass die Welle eine konstante Wellenlänge λ und eine konstante Amplitude aufweist. Wie Fig. 5 ferner zeigt, verläuft die Einschnittzone 13c, im erwähnten Querschnitt betrachtet und bezogen auf die Einschnittmittelfläche M_{E}, in radialer Richtung über 2,5 Wellenlängen λ und weist zusätzlich einen im bereits erwähnten Abstand a₂ von der Laufstreifenperipherie endenden, radial äußeren Übergangsbereich 13c', in welchem die Wellenform über weniger als 0,5 Wellenlängen λ fortgeführt ist, und einen gebogen verlaufenden, radial inneren Übergangsbereich 13c" auf. Die Übergangsbereiche 13c', 13c" sorgen, im erwähnten Querschnitt betrachtet, für tangentiale (knickfreie) Übergänge der Einschnittzone 13c zum entsprechenden, anschließenden Bereich des Einschnittabschnitts 13.

Gemäß Fig. 3 weist der Einschnittabschnitt 14 ausschließlich die in Draufsicht vorliegenden Wellenform auf. Ferner weist der Einschnittabschnitt 14 in radialer Richtung eine konstante Tiefe t₂ (Fig. 4) von 10% bis 20% der maximalen Tiefe t_{E} des Einschnitts 10 auf.

Gemäß Fig. 5 ist der Einschnittgrund 12, im in Draufsicht senkrecht zur Einschnittbasislinie b₁₀ (Fig. 3) verlaufenden Querschnitt betrachtet (vergl. Lage der Linie V-V in Fig. 4), gerundet ausgeführt und weist einen Durchmesser d_{G} auf, welcher zumindest 0,2 mm größer ist als die Breite b_{E}. Der Durchmesser d_{G} beträgt insbesondere 1,0 mm bis 3,5 mm, bevorzugt 1,5 mm bis 2,5 mm. Wie Fig. 4 zeigt, setzt sich der Einschnittgrund 12 aus einem parallel zur Laufstreifenperipherie ausgerichteten, im Bereich 13a verlaufenden Abschnitt 12a, einem parallel zur Laufstreifenperipherie ausgerichteten, über den Bereich 13b verlaufenden Abschnitt 12b, einen parallel zur Laufstreifenperipherie ausgerichteten, im Einschnittabschnitt 14 verlaufenden Abschnitt 12c, einem zwischen dem Abschnitt 12a und dem Abschnitt 12c verlaufenden Übergangsabschnitt 12d und einem zwischen dem Abschnitt 12a und dem Abschnitt 12b verlaufenden Übergangsabschnitt 12e zusammen. Der Übergangsabschnitt 12d verläuft über den Großteil seiner Erstreckung gerade sowie - bezogen auf eine nicht eingezeichnete Kanalmittellinie - zur radialen Richtung unter einem Winkel δ von 3° bis 20°, insbesondere von 5° bis 10°. Der Übergangsabschnitt 12e verläuft S-förmig gebogen sowie - bezogen auf eine die Enden des zugehörigen Abschnitts der Kanalmittellinie verbindende gerade Linie - zur radialen Richtung unter einem Winkel ε 25° bis 45°, insbesondere von 30° bis 40°.

Gemäß Fig. 2 sind innerhalb einer Profilstruktur 3a aufeinanderfolgende Einschnitte 10 derart ausgeführt, dass jeweils ein Einschnitt 10 mit einem ausgehend vom gegenseitigen Anschluss der Einschnittabschnitte 13, 14 in Richtung zum einen Laufstreifenrand verlaufender Einschnittabschnitt 13 auf einen Einschnitt 10 mit einem ausgehend vom gegenseitigen Anschluss der Einschnittabschnitte 13, 14 in Richtung zum jeweils anderen Laufstreifenrand verlaufenden Einschnittabschnitt 13 folgt. Die Einschnittabschnitte 13, 14 von aufeinanderfolgenden Einschnitten 10 sind daher bezüglich ihrer Lage in den Einschnitten 10 abwechselnd angeordnet.

Die Erfindung ist auf das beschriebene Ausführungsbeispiel nicht beschränkt.

Der Laufstreifen muss nicht laufrichtungsgebunden ausgeführt sein. Die randseitigen Einschnitte 9 sind optional.

Die Einschnitte 10 können in durch Rillen begrenzten Profilblöcken, blockartigen Profilstrukturen oder in in Umfangsrichtung umlaufenden Profilrippen vorgesehen sein. Die Einschnitte 10 können, in Draufsicht betrachtet, gerade oder über einen Teil der bzw. über die gesamte Erstreckungslänge c_{E} wellenförmig verlaufen. Ferner können die Einschnitte 10 - bezogen auf ihre Einschnittbasislinien b₁₀ (betrifft in Draufsicht zumindest abschnittsweise wellenförmig verlaufende Einschnitte 10) bzw. ihre Einschnittmittellinien m_{E} (betrifft in Draufsicht nicht wellenförmig verlaufende Einschnitte 10) bogenförmig (durchgehend gebogen) verlaufen. Der Winkel γ, unter welchem die Einschnitte 10 zur axialen Richtung verlaufen, beträgt 0° bis 70°.

Der Einschnittgrund 12 kann herkömmlich - also nicht kanalförmig - ausgeführt sein.

Der Einschnittabschnitt 14 kann, im Querschnitt betrachtet, zur radialer Richtung unter einem Winkel von bis zu 2° verlaufen.

Die Einschnittzone 13c verläuft, im in Draufsicht senkrecht zur Einschnittmittellinie m_{E} verlaufenden Querschnitt betrachtet und bezogen auf die Einschnittmittelfläche M_{E}, in radialer Richtung über zumindest 1,5 Wellenlängen λ, insbesondere über 2,0 Wellenlängen λ bis 5,0 Wellenlängen λ. Ferner kann die Höhe hz der Einschnittzone 13c - wenn ein herkömmlich ausgeführter Einschnittgrund 12 vorgesehen ist - bis zu 100% der maximalen Tiefe t_{E} betragen.

### Bezugszeichenliste

- 1: Laufstreifen
- 1a: Randkante
- 2: schulterseitige Profilrippe
- 3: zentraler Laufstreifenbereich
- 3a: blockartige Profilstruktur
- 3a': stumpfwinkeliger Eckbereich
- 3a": spitzwinkliger Eckbereich
- 4: Umfangsrille
- 4a: laufstreifenaußenseitige Rillenkante
- 4b: laufstreifeninnenseitige Rillenkante
- 5: schulterseitiger Profilblock
- 6: schulterseitige Querrille
- 7: Schrägrille
- 7a: Rillengrund
- 7b: Rillenflanke
- 7c: Endflanke
- 8: Teilungseinschnitt
- 9: Einschnitt
- 10: Einschnitt
- 11: Einschnittwand
- 12: Einschnittgrund
- 12a: Abschnitt
- 12b: Abschnitt
- 12c: Abschnitt
- 12d: Übergangsabschnitt
- 12e: Übergangsabschnitt
- 13: Einschnittabschnitt
- 13a: Bereich
- 13b: randseitiger Bereich
- 13c: Einschnittzone
- 13c': radial äußerer Übergangsbereich
- 13c": radial innerer Übergangsbereich
- 14: Einschnittabschnitt
- A-A: Linie (Reifenäquatorialebene)
- a₁, a₂: Abstand
- B₁, B_{UR}, b_{E}, b_{SR}: Breite
- b_{b}: maximale Breite
- b₈, b₉, b₁₀: Einschnittbasislinie
- c₁, cₐ, c_{E}, c_{SR}: Erstreckungslänge
- d_{G}: Durchmesser
- h₁: Hilfslinie
- h_{Z}: Höhe
- m_{E}: Einschnittmittellinie
- M_{E}: Einschnittmittelfläche
- m_{SR}, m_{UR}: Rillenmittellinie
- R: Pfeil (Abrollrichtung)
- t₁, t₂: Tiefe
- t_{E}: maximale Tiefe
- α, β, γ, δ, ε: Winkel
- λ: Wellenlänge

## Patentansprüche

1. Fahrzeugluftreifen, insbesondere Nutzfahrzeugreifen, mit einem Laufstreifen (1) mit schulterseitigen Profilrippen (2) und einem von diesen durch Rillen (4) getrennten zentralen Laufstreifenbereich (3) mit blockartigen Profilstrukturen (3a) und/oder Profilblöcken, welche mit zur axialen Richtung unter einem Winkel (γ) von 0° bis 70° verlaufenden Einschnitten (10) mit einer Breite (b_{E}) von 0,4 mm bis 1,6 mm, einer maximalen Tiefe (t_{E}) von 70% bis 100% der Profiltiefe und einer an der Laufstreifenperipherie ermittelten Erstreckungslänge (c_{E}) versehen sind, wobei die Einschnitte (10), in Draufsicht betrachtet, jeweils einen ersten Einschnittabschnitt (14), welcher, im Querschnitt betrachtet, gerade sowie in radialer Richtung oder zu dieser unter einem Winkel von bis zu 2° verläuft, und einen zweiten Einschnittabschnitt (13) mit einer Erstreckungslänge (c₁) von 55% bis 90% der Erstreckungslänge (c_{E}) des Einschnitts (10) aufweisen, wobei der zweite Einschnittabschnitt (13) über seine komplette Erstreckungslänge (c₁) eine Einschnittzone (13c) aufweist, welche in radialer Richtung gewellt mit zumindest 1,5 Wellenlängen (λ) verläuft und eine in radialer Richtung ermittelte maximale Höhe (hz) von 50% bis 100% der maximalen Tiefe (t_{E}) des Einschnitts (10) aufweist, wobei blockartige Profilstrukturen (3a) und/oder Profilblöcke mit jeweils zumindest zwei Einschnitten (10) vorgesehen sind, wobei die zwei Einschnitte (10), in Draufsicht betrachtet,
- in axialer Richtung verlaufen,
- zur axialen Richtung gleichsinnig geneigt verlaufen oder
- von welchen einer in axialer Richtung und der andere zur axialen Richtung geneigt verläuft,
**dadurch gekennzeichnet,**
**dass** sich die zumindest zwei Einschnitte (10) jeweils aus dem ersten und dem zweiten Einschnittabschnitt (13, 14) zusammensetzen, wobei innerhalb einer blockartigen Profilstruktur (3a) bzw. eines Profilblocks der erste und der zweite Einschnittabschnitt (13, 14) in aufeinanderfolgenden Einschnitten (10) - bezüglich ihrer Lage im Einschnitt (10) - abwechselnd verlaufen und wobei sich der zweite Einschnittabschnitt (13), in der in Draufsicht vorliegenden Erstreckungsrichtung des Einschnitts (10) betrachtet, aus einem an den ersten Einschnittabschnitt (14) anschließenden, in radialer Richtung auf die maximale Tiefe (t_{E}) des Einschnitts (10) reichenden Bereich (13a) und einem randseitigen Bereich (13b) mit einer in radialer Richtung ermittelten konstanten Tiefe (t₁) von 70% bis 90% der maximalen Tiefe (t_{E}) des Einschnitts (10) zusammensetzt.

2. Fahrzeugluftreifen nach Anspruch 1, **dadurch gekennzeichnet, dass** die Erstreckungslänge (c₁) des zweiten Einschnittabschnitts (13) 60% bis 80% der Erstreckungslänge (c_{E}) des Einschnitts (10) beträgt.

3. Fahrzeugluftreifen nach Anspruch 1 oder 2, **dadurch gekennzeichnet, dass** der Bereich (13a), welcher in radialer Richtung auf die maximale Tiefe (t_{E}) des Einschnitts (10) reicht, eine Erstreckungslänge (cₐ) von 45% bis 90%, insbesondere von bis zu 75%, der Erstreckungslänge (c₁) des zweiten Einschnittabschnitts (13) aufweist.

4. Fahrzeugluftreifen nach einem der Ansprüche 1 bis 3, **dadurch gekennzeichnet, dass** der erste Einschnittabschnitt (14) in radialer Richtung eine konstante Tiefe (t₂) von 10% bis 20% der maximalen Tiefe (t_{E}) des Einschnitts (10) aufweist.

5. Fahrzeugluftreifen nach einem der Ansprüche 1 bis 4, **dadurch gekennzeichnet, dass** die Einschnitte (10), in Draufsicht betrachtet, zumindest über den Großteil ihrer Erstreckungslänge (c_{E}) in Form einer harmonischen Welle verlaufen.

6. Fahrzeugluftreifen nach einem der Ansprüche 1 bis 5, **dadurch gekennzeichnet, dass** die Einschnittzone (13c) bezogen auf ihren äußeren Umfang rechteckförmig ausgebildet ist.

7. Fahrzeugluftreifen nach einem der Ansprüche 1 bis 6, **dadurch gekennzeichnet, dass** die maximale Höhe (hz) der Einschnittzone (13c) bis zu 95%, insbesondere 60% bis 90%, bevorzugt bis zu 75%, der maximalen Tiefe (t_{E}) des Einschnitts (10) beträgt.

8. Fahrzeugluftreifen nach einem der Ansprüche 1 bis 7, **dadurch gekennzeichnet, dass** die Einschnittzone (13c) zur Laufstreifenperipherie in radialer Richtung einen konstanten Abstand (a₂) von 0,5 mm bis 1,5 mm aufweist.

9. Fahrzeugluftreifen nach einem der Ansprüche 1 bis 8, **dadurch gekennzeichnet, dass** die Einschnittzone (13c) in radialer Richtung über 2,0 bis 5,0 Wellenlängen (λ) verläuft.

10. Fahrzeugluftreifen nach einem der Ansprüche 1 bis 9, **dadurch gekennzeichnet, dass** die Einschnitte (10) die blockartigen Profilstrukturen (3a) bzw. die Profilblöcke durchqueren.

11. Fahrzeugluftreifen nach Anspruch 4, **dadurch gekennzeichnet, dass** die Einschnitte (10) jeweils einen Einschnittgrund (12) aufweisen, welcher sich aus einem im auf die maximale Tiefe (t_{E}) des Einschnitts (10) reichenden Bereich (13a) befindlichen, auf der maximalen Tiefe (t_{E}) verlaufenden ersten Abschnitt (12a), einen über den randseitigen Bereich (13b) verlaufenden zweiten Abschnitt (12b), einen im ersten Einschnittabschnitt (14) verlaufenden dritten Abschnitt (12c) und zwischen den Abschnitten (12a, 12b, 12c) verlaufenden Übergangsabschnitten (12d, 12e) zusammensetzt, wobei der Übergangsabschnitt (12d) zwischen dem ersten und dem dritten Abschnitt (12a, 12c) zur radialen Richtung unter einem Winkel (δ) von 3° bis 20°, insbesondere von 5° bis 10°, verläuft und wobei der Übergangsabschnitt (12e) zwischen dem ersten und dem zweiten Abschnitt (12a, 12b) zur radialen Richtung unter einem Winkel (ε) von 25° bis 45°, insbesondere von 30° bis 40°, verläuft.

## Claims

1. Pneumatic vehicle tyre, in particular utility-vehicle tyre, having a tread (1) with shoulder-side profile ribs (2) and with a central tread region (3) which is separated from said shoulder-side profile ribs by grooves (4) and which has block-like profile structures (3a) and/or profile blocks provided with sipes (10) extending at an angle (γ) of 0° to 70° to the axial direction, said sipes having a width (b_{E}) of 0.4 mm to 1.6 mm, a maximum depth (t_{E}) of 70% to 100% of the profile depth and an extent length (c_{E}), determined at the tread periphery, wherein, when seen in plan view, the sipes (10) have in each case one first sipe portion (14), which, when seen in cross-section, extends straight and in a radial direction or at an angle of up to 2° thereto, and one second sipe portion (13), which has an extent length (c₁) of 55% to 90% of the extent length (c_{E}) of the sipe (10), wherein the second sipe portion (13) has over its complete extent length (c₁) a sipe zone (13c) which extends in a wave-like manner with at least 1.5 wavelengths (λ) in the radial direction and which has a maximum height (hz), determined in the radial direction, of 50% to 100% of the maximum depth (t_{E}) of the sipe (10), wherein provision is made of block-like profile structures (3a) and/or profile blocks with in each case at least two sipes (10), wherein, when seen in plan view, the two sipes (10)
- extend in the axial direction,
- extend inclined to the axial direction in the same direction, or
- are such that one extends in the axial direction and the other extends inclined to the axial direction,
**characterized**
**in that** the at least two sipes (10) are in each case made up of the first and second sipe portions (13, 14), wherein, within a block-like profile structure (3a) or a profile block, the first and second sipe portions (13, 14) in successive sipes (10) extend - with regard to their position in the sipe (10) - in an alternating manner, and wherein, when seen in the extent direction of the sipe (10) in plan view, the second sipe portion (13) is made up of a region (13a) adjoining the first sipe portion (14), which region reaches the maximum depth (t_{E}) of the sipe (10) in the radial direction, and an edge-side region (13b), which has a constant depth (t₁), determined in the radial direction, of 70% to 90% of the maximum depth (t_{E}) of the sipe (10).

2. Pneumatic vehicle tyre according to Claim 1, **characterized in that** the extent length (c₁) of the second sipe portion (13) is 60% to 80% of the extent length (c_{E}) of the sipe (10).

3. Pneumatic vehicle tyre according to Claim 1 or 2, **characterized in that** the region (13a) reaching the maximum depth (t_{E}) of the sipe (10) in the radial direction has an extent length (cₐ) of 45% to 90%, in particular of up to 75%, of the extent length (c₁) of the second sipe portion (13).

4. Pneumatic vehicle tyre according to one of Claims 1 to 3, **characterized in that** the first sipe portion (14) has in the radial direction a constant depth (t₂) of 10% to 20% of the maximum depth (t_{E}) of the sipe (10).

5. Pneumatic vehicle tyre according to one of Claims 1 to 4, **characterized in that**, when seen in plan view, the sipes (10), at least over the majority of their extent length (c_{E}), extend with the form of a harmonic wave.

6. Pneumatic vehicle tyre according to one of Claims 1 to 5, **characterized in that** the sipe zone (13c) is of rectangular form in relation to its outer periphery.

7. Pneumatic vehicle tyre according to one of Claims 1 to 6, **characterized in that** the maximum height (h_{Z}) of the sipe zone (13c) is up to 95%, in particular 60% to 90%, preferably up to 75%, of the maximum depth (t_{E}) of the sipe (10).

8. Pneumatic vehicle tyre according to one of Claims 1 to 7, **characterized in that** the sipe zone (13c) is at a constant distance (a₂) of 0.5 mm to 1.5 mm from the tread periphery in the radial direction.

9. Pneumatic vehicle tyre according to one of Claims 1 to 8, **characterized in that** the sipe zone (13c) extends over 2.0 to 5.0 wavelengths (λ) in the radial direction.

10. Pneumatic vehicle tyre according to one of Claims 1 to 9, **characterized in that** the sipes (10) traverse the block-like profile structures (3a) or the profile blocks.

11. Pneumatic vehicle tyre according to Claim 4, **characterized in that** the sipes (10) each have a sipe base (12) which is made up of a first portion (12a), situated in the region (13a) that reaches the maximum depth (t_{E}) of the sipe (10) and extending at the maximum depth (t_{E}), a second portion (12b), extending over the edge-side region (13b), a third portion (12c), extending in the first sipe portion (14), and transition portions (12d, 12e), extending between the portions (12a, 12b, 12c), wherein the transition portion (12d) between the first and third portions (12a, 12c) extends at an angle (δ) of 3° to 20°, in particular of 5° to 10°, to the radial direction, and wherein the transition portion (12e) between the first and second portions (12a, 12b) extends at an angle (ε) of 25° to 45°, in particular of 30° to 40°, to the radial direction.

## Revendications

1. Pneumatique de véhicule, notamment pneu de véhicule utilitaire, avec une bande de roulement (1) avec des nervures de profil (2) côté épaulement et une zone centrale de bande de roulement (3) séparée de celles-ci par des rainures (4) avec des structures de profil de type bloc (3a) et/ou des blocs de profil, qui sont pourvus d'entailles (10) s'étendant selon un angle (γ) de 0° à 70° par rapport à la direction axiale, ayant une largeur (b_{E}) de 0,4 mm à 1,6 mm, une profondeur maximale (t_{E}) de 70 % à 100 % de la profondeur de profil et une longueur d'extension (c_{E}) déterminée au niveau de la périphérie de la bande de roulement, les entailles (10), considérées en vue de dessus, présentant chacune une première section d'entaille (14) qui, considérée en coupe transversale, s'étend de manière rectiligne et dans la direction radiale ou à un angle de jusqu'à 2° par rapport à celle-ci, et une deuxième section d'entaille (13) ayant une longueur d'extension (c₁) de 55 % à 90 % de la longueur d'extension (c_{E}) de l'entaille (10), la deuxième section d'entaille (13) présentant sur toute sa longueur d'extension (c₁), une zone d'entaille (13c) qui s'étend de manière ondulée dans la direction radiale avec au moins 1,5 longueur d'onde (λ) et présente une hauteur maximale (hz) déterminée dans la direction radiale de 50 % à 100 % de la profondeur maximale (t_{E}) de l'entaille (10), des structures de profil de type bloc (3a) et/ou des blocs de profil étant pourvus chacun d'au moins deux entailles (10), les deux entailles (10), considérées en vue de dessus,
- s'étendant dans la direction axiale,
- s'étendant de manière inclinée dans le même sens par rapport à la direction axiale ou
- l'une s'étendant dans la direction axiale et l'autre s'étendant de manière inclinée par rapport à la direction axiale,
**caractérisé**
**en ce que** les au moins deux entailles (10) sont composées chacune de la première et de la deuxième section de rainure (13, 14) ; à l'intérieur d'une structure de profil de type bloc (3a) ou d'un bloc de profil, la première et la deuxième section de rainure (13, 14) s'étendant en alternance dans des entailles successives (10) - par rapport à leur position dans l'entaille (10) - et la deuxième section d'entaille (13), considérée dans la direction d'extension de l'entaille (10) présente en vue de dessus, se composant d'une zone (13a) qui se raccorde à la première section d'entaille (14) et s'étend dans la direction radiale jusqu'à la profondeur maximale (t_{E}) de l'entaille (10) et d'une zone de bord (13b) ayant une profondeur constante (t₁) déterminée dans la direction radiale de 70 % à 90 % de la profondeur maximale (t_{E}) de l'entaille (10).

2. Pneumatique de véhicule selon la revendication 1, **caractérisé en ce que** la longueur d'extension (c₁) de la deuxième section d'entaille (13) représente 60 % à 80 % de la longueur d'extension (c_{E}) de l'entaille (10).

3. Pneumatique de véhicule selon la revendication 1 ou 2, **caractérisé en ce que** la zone (13a) qui s'étend dans la direction radiale jusqu'à la profondeur maximale (t_{E}) de l'entaille (10) présente une longueur d'extension (cₐ) de 45 % à 90 %, notamment de jusqu'à 75 %, de la longueur d'extension (c₁) de la deuxième section d'entaille (13).

4. Pneumatique de véhicule selon l'une quelconque des revendications 1 à 3, **caractérisé en ce que** la première section d'entaille (14) présente, dans la direction radiale, une profondeur constante (t₂) de 10 % à 20 % de la profondeur maximale (t_{E}) de l'entaille (10).

5. Pneumatique de véhicule selon l'une quelconque des revendications 1 à 4, **caractérisé en ce que** les entailles (10), considérées en vue de dessus, s'étendent au moins sur la majeure partie de leur longueur d'extension (c_{E}) sous la forme d'une onde harmonique.

6. Pneumatique de véhicule selon l'une quelconque des revendications 1 à 5, **caractérisé en ce que** la zone d'entaille (13c) est réalisée sous forme rectangulaire par rapport à son périmètre extérieur.

7. Pneumatique de véhicule selon l'une quelconque des revendications 1 à 6, **caractérisé en ce que** la hauteur maximale (hz) de la zone d'entaille (13c) représente jusqu'à 95 %, notamment 60 % à 90 %, de préférence jusqu'à 75 %, de la profondeur maximale (t_{E}) de l'entaille (10).

8. Pneumatique de véhicule selon l'une quelconque des revendications 1 à 7, **caractérisé en ce que** la zone d'entaille (13c) présente une distance constante (a₂) de 0,5 mm à 1,5 mm par rapport à la périphérie de la bande de roulement dans la direction radiale.

9. Pneumatique de véhicule selon l'une quelconque des revendications 1 à 8, **caractérisé en ce que** la zone d'entaille (13c) s'étend dans la direction radiale sur 2,0 à 5,0 longueurs d'onde (λ).

10. Pneumatique de véhicule selon l'une quelconque des revendications 1 à 9, **caractérisé en ce que** les entailles (10) traversent les structures de profil de type bloc (3a) ou les blocs de profil.

11. Pneumatique de véhicule selon la revendication 4, **caractérisé en ce que** les entailles (10) présentent chacune une base d'entaille (12) qui se compose d'une première section (12a) se trouvant dans la zone (13a) s'étendant jusqu'à la profondeur maximale (t_{E}) de l'entaille (10) et s'étendant jusqu'à la profondeur maximale (t_{E}), d'une deuxième section (12b) s'étendant sur la zone de bord (13b), d'une troisième section (12c) s'étendant dans la première section d'entaille (14) et de sections de transition (12d, 12e) s'étendant entre les sections (12a, 12b, 12c), la section de transition (12d) entre la première et la troisième section (12a, 12c) s'étendant par rapport à la direction radiale selon un angle (δ) de 3° à 20°, notamment de 5° à 10°, et la section de transition (12e) entre la première et la deuxième section (12a, 12b) s'étendant par rapport à la direction radiale selon un angle (ε) de 25° à 45°, notamment de 30° à 40°.
